# EUROPEAN PATENT APPLICATION

(11) **EP 2 014 958 A2**
(43) Date of publication of application: **14.01.2009**
(21) Application number: 08159422.8
(22) Date of filing: 01.07.2008
(51) Int. Cl.: F16H 61/40, F16H 61/44, F16H 59/08

(54) **Reverse over-ride system for mower traction drive**

(30) Priority: 10.07.2007 US 775402
(71) Applicant: Deere & Company, Moline, IL 61265-8098 (US)
(72) Inventor: Link, Todd A., Apex, NC 27502 (US)
(74) Representative: Löser, Iris

(57) **Abstract**

A reverse over-ride system is provided for a mower traction drive having a front pair of hydraulic traction motors (116, 117) and a rear pair of hydraulic traction motors (118, 119). Each motor (116, 117, 118. 119) is operable in a forward direction or a reverse direction, and each front motor (116, 117) is in series with a rear motor (118, 119). The system includes a solenoid operated valve (120, 121) connected to each rear motor (116, 117, 118, 119). Each solenoid operated valve (120, 121) has a first position in which a check valve opens to allow recirculation through the rear wheel motors (118, 119) while the mower operates in a forward turn, and closes to disallow recirculation so the rear wheel motors (118, 119) may build pressure and drive during hill climbing. Each solenoid operated valve (120, 121) has a second position allowing free rotation of the rear motor (118, 119) while the machine operates in a reverse direction. A mechanical or electronic linkage is provided between the reverse pedal (127) and solenoid operated valves (120, 121).

## Description

This invention relates generally to traction drives used on machines with hydraulic pumps and wheel motors. More specifically, the invention relates to a hydraulic system for operating a traction drive system for a grass mowing machine or similar vehicle in reverse while minimizing wheel slippage.

Grass mowing machines and similar vehicles may have hydraulic traction drive systems designed for improved traction of the machine. Several hydraulic traction drive systems are intended to prevent or limit wheel slip and optimize the machine's traction and hill climbing capability, while maintaining its performance and functionality.

For example, one type of hydraulic system intended for improved traction includes valving to control the flow and/or pressure being distributed to each of the wheel motors. US Patent No. 6,073,716 relates to such a hydraulic traction drive system having velocity fuses to stop the flow of hydraulic fluid to the slipping wheel. Such a system has advantages, but may cause instability in the system because the valves open and close flow passages in an on/off fashion. By relying on the flow induced pressure signals, such a system would not perform adequately under low flow conditions. Additionally, in rear steered vehicles, the vehicle dynamics in turns can cause false wheel slip signals to the fuses, causing unwanted reactions, especially if flow is curtailed to the outside wheel. While relying on the pressure differential across the valve caused by flow, there could be no signal on the wheel motor side of the valve to cause the valve to reopen allowing the wheel motor to regain drive.

Alternatively, another type of hydraulic system having a valving arrangement intended to improve traction includes speed sensors at the wheel motors, and proportional valves to meter the flow to the individual motors. When sudden wheel speed change is sensed, the valve meters the hydraulic flow to the respective wheel. However, the cost of such a system requiring sensors, valves and a controller is not feasible for many applications.

Another hydraulic traction drive system includes a flow divider or flow regulator to divert hydraulic flow away from a slipping wheel. Unfortunately, on front wheel drive machines, during a turn, the flow divider or flow regulator may divert flow away from the outside wheel, causing that wheel to stall which may prevent the machine from turning effectively. This type of hydraulic circuit may be used feasibly as an on demand differential lock activated by the operator. However, flow dividers also may be relatively high generators of heat within a hydraulic system, which is a nondesireable condition.

Another hydraulic traction drive system to limit wheel slippage involves configuring the wheel motors in a parallel-series circuit. Such a circuit can limit front wheel slip while climbing hills. This system may include a flow path from the traction drive (propulsion) pump to both front wheel hydraulic motors in parallel, and from the outlet of each front wheel motor to the inlet of a separate rear wheel motor. The outlet flow of the rear motors may then be recombined and returned to the propulsion pump.

As a mowing machine with the above described hydraulic circuit climbs a hill, the weight distribution of the machine shifts from the front wheels to the rear wheels. The magnitude of the weight shift may depend on the slope of the hill. At some point, the front wheels of the mowing machine may slip and prevent the machine from continuing to climb the hill. The point where wheel slip occurs may depend on the slope, center of gravity of the machine, and friction of the ground surface. The front wheel motor outlets may be tied to the rear motor inlets to prevent the front wheels from spinning, and continue to produce torque.

The rear wheels of these rear steered mowing machines must travel a further distance than the front wheels within a steered circle. As a result, each rear wheel requires greater flow of hydraulic fluid than the flow supplied through the respective front motor on the same side of the vehicle. To overcome this difference in flow, a check valve may be provided in each rear motor to recirculate the oil from the outlet of each rear motor to the inlet. As the mowing machine is traveling in a straight line, the check valves seal the recirculation passage, allowing pressure build up at the inlet of the rear wheel motors, producing torque to drive the machine.

As the mowing machine turns as it travels forward, the check valve opens the recirculation passage. Additionally, the rear wheel hydraulic motor displacement and rear wheel tires may be sized slightly larger than the front wheel motors and tires, to prevent the rear motor from producing a faster ground speed and scuffing the turf during a turn.

As the mowing machine turns as it travels in reverse, however, the check valve does not open the recirculation passage. Turning in reverse also requires the rear motor to travel a further distance and require more oil than the respective front motor. As the machine turns in reverse, pressure is built between the front and rear motors, preventing the check valve, utilized to recirculate oil, from opening. This prevents the rear wheels from rotating freely to allow the machine to turn in reverse. As a result, the rear wheels skid along the grass and damage the turf, preventing the machine from completing a sufficient turn.

It is therefore the object of the present invention to overcome one, several or all of these disadvantages.

This object is met according to the invention by the teaching of claim 1 respectively, while features developing the solution in an advantageous manner are set forth in the further claims.

A reverse over-ride system is provided for a mower traction drive. Solenoid operated valves are provided in parallel with the rear wheel motors. During forward operation of the mower, the solenoid operated valves are in a first position allowing oil to recirculate through the rear wheel motors as the mower turns. During reverse operation, the solenoids may be energized to move the valves to a second position and allow the rear wheels to freely rotate. The solenoid may be energized when the operator depresses a reverse pedal or lever.

A reverse over-ride system for a mower traction drive may comprise a front pair of hydraulic traction motors and a rear pair of hydraulic traction motors, each motor operable in a forward direction or a reverse direction, each front motor being in a series hydraulic circuit with a rear motor; a solenoid operated valve connected to each rear motor and having a first position allowing recirculation through a rear motor while the front motor drives in a forward direction during turns, and a second position allowing free rotation of the rear motor while the front motor drives in a reverse direction; and a linkage between a reverse pedal and the solenoid operated valves.

The linkage between the reverse pedal and the solenoid operated valves may include a reverse switch mechanically linked to the reverse pedal.

The mechanical linkage may include a rod.

The linkage between the reverse pedal and the solenoid operated valves may be electronic.

Each solenoid operated valve may include a poppet valve.

A reverse over-ride system for a mower traction drive may comprise a hydraulic circuit directing hydraulic fluid to a pair of front wheel hydraulic traction motors and a pair of rear wheel hydraulic traction motors; a reverse pedal movable from a disengaged position to an engaged position; and the reverse pedal connected to a pair of solenoid operated valves such that moving the reverse pedal to the engaged position moves the solenoid operated valves to a position allowing the hydraulic fluid to bypass the pair of rear wheel hydraulic traction motors.

Moving the reverse pedal to the disengaged position may move the solenoid operated valves to a position allowing hydraulic fluid to recirculate through the pair of rear wheel hydraulic traction motors during turns.

The reverse pedal may be mechanically linked to a reverse switch.

The reverse switch may be actuated by a return to neutral mechanism.

The reverse pedal may be electronically linked to the solenoid operated valves.

An embodiment of the invention described below is shown in the drawings, in which
- Fig. 1: is a perspective view of a grass mowing machine that includes a reverse over-ride system for a mower traction drive according to a first embodiment of the invention.
- Fig. 2: is a schematic diagram of a first embodiment of a reverse over-ride system for a mower traction drive during forward operation.
- Fig. 3: is a schematic diagram of a first embodiment of a reverse over-ride system for a mower traction drive during reverse operation.
- Fig. 4: is a perspective view of a reverse switch mounted on a hydrostatic pump in a reverse over-ride system according to a first embodiment of the invention.
- Fig. 5: is a perspective view of a reverse over-ride system on a frame of a grass mowing machine according to a first embodiment of the invention.

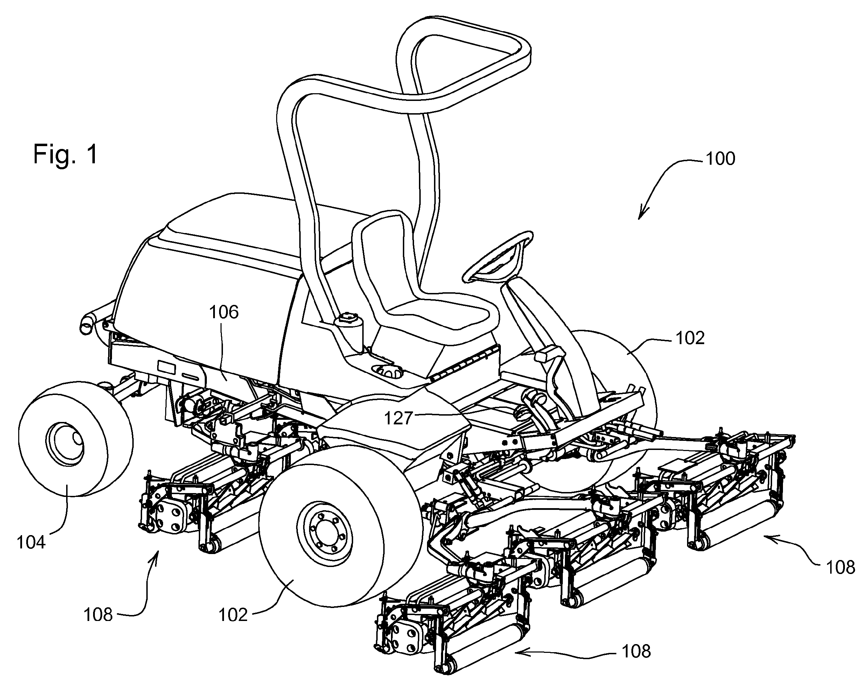

Fig. 1 shows grass mowing machine 100 having a pair of front wheels 102 and a pair of rear wheels 104 supporting a frame 106. The front and rear wheels provide traction drive, and the rear wheels also may be used for steering. The grass mowing machine may have reel-type cutting units 108 for mowing golf courses and athletic fields, or rotary cutting units. Power from an internal combustion engine or other power source mounted on the frame may be transmitted to the front and rear wheels by a hydraulic transmission. For example, the engine may provide power to a hydrostatic transmission pump through a belt or other power transmission link.

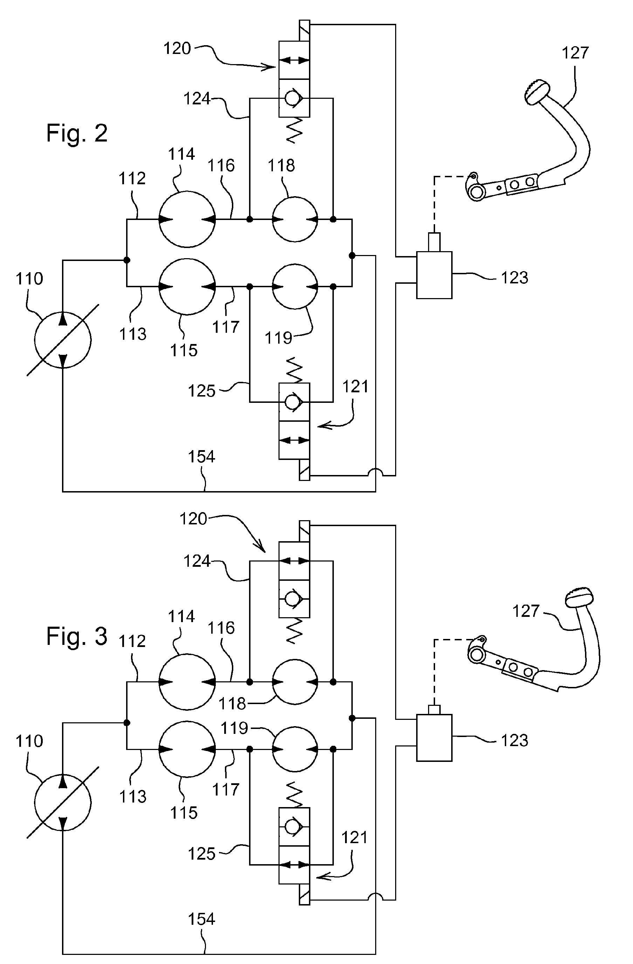

In the schematic diagrams shown in Figs. 2-3, pump 110 is connected to hydraulic conduits 112, 113 that are attached to inlets of left and right front hydraulic traction motors 114, 115. The left and right front hydraulic traction motors are connected in a parallel hydraulic circuit with each other. The outlet of each front motor 116, 117 is then connected to a rear motor 118, 119. Each front motor is connected in a series hydraulic circuit with a rear hydraulic traction motor.

In one embodiment, a solenoid operated valve 120, 121 is connected in parallel with each rear hydraulic traction motor 118, 119. Each solenoid operated valve 120, 121 may be biased to the first position shown in Fig. 2, and may move to a second position shown in Fig. 3 upon energization of the solenoid coils. For example, the solenoid coils may be energized by reverse switch 123. Each solenoid operated valve 120, 121 may be in the first position shown in Fig. 2 during forward machine operation. In the first position, the solenoids are deenergized, providing check valves in hydraulic lines 124, 125 in parallel with rear hydraulic traction motors 118, 119. While the solenoid operated valves are deenergized and in the first position, hydraulic fluid can recirculate through the rear hydraulic traction motors because the check valves open during turns, so that the rear motors can rotate faster than the corresponding front motors. If the mower is not turned, the check valves remain closed and do not allow recirculation, so the rear wheel motors may build pressure and provide torque to drive during hill climbing.

Each solenoid operated valve 120, 121 may move to the second position shown in Fig. 3 during reverse machine operation. In the second position, the solenoids are energized by moving or depressing reverse pedal 127 or lever from a normally disengaged position to an engaged position in which the front hydraulic traction motors drive in reverse. The energized solenoid operated valves allow flow through hydraulic lines 124, 125 around rear hydraulic traction motors 118, 119. As a result, when the solenoid operated valves are in the second position, the rear motors and wheels can rotate freely and do not provide torque. As a result, if the reverse pedal is in the engaged position, hydraulic flow can bypass the rear wheel hydraulic traction motors.

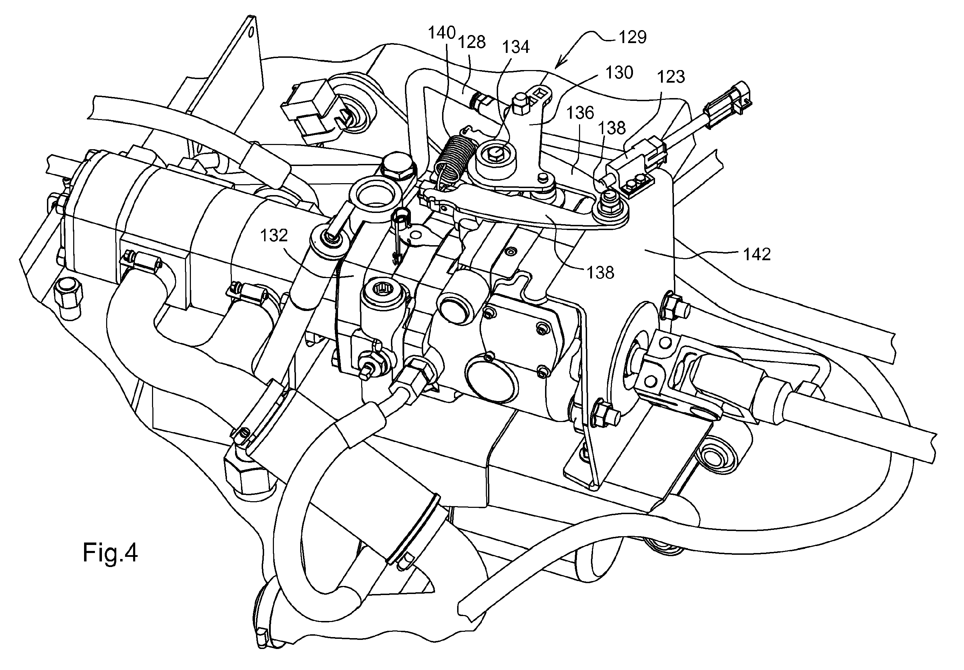

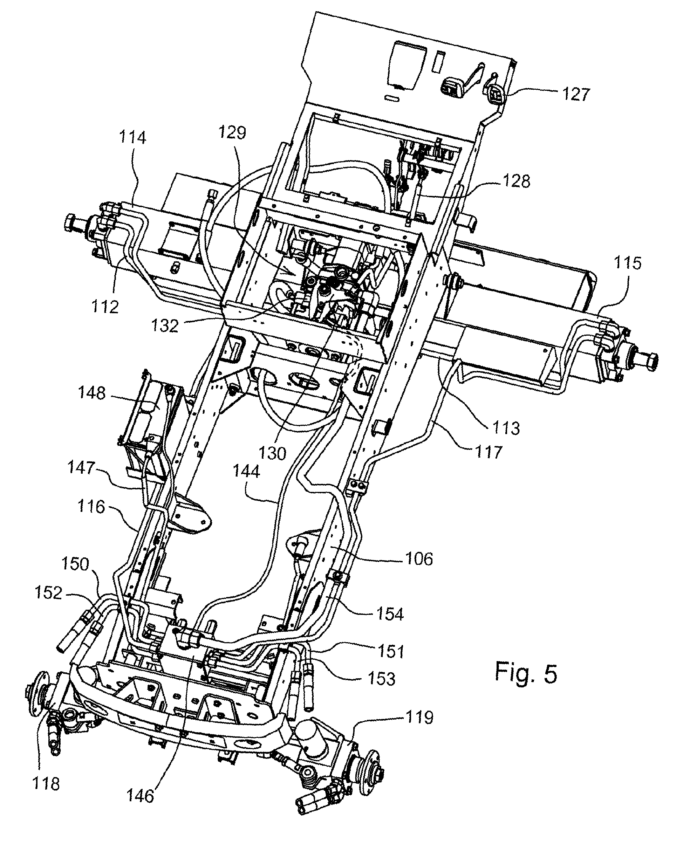

As shown in Figs. 4 and 5, the solenoid operated valves may be energized by depressing reverse foot pedal 127. In one embodiment, a reverse switch 123 may be used as part of a mechanical linkage between reverse foot pedal 127 and the solenoid operated valves. For example, reverse pedal 127 may be pivotably connected to traction rod 128, and depressing the reverse pedal may pull the traction rod rearwardly. Traction rod 128 may be pivotably connected to return to neutral mechanism 129. The return to neutral mechanism may include cam plate 130 mounted on hydrostatic transmission pump 132. Cam plate 130 pivots on shaft 134 attached to a swashplate in pump 132. The return to neutral mechanism also may include return to neutral arms 136, 138 and return to neutral spring 140 that biases the cam plate and pump toward the neutral position.

In one embodiment, reverse switch 123 may be a push button switch that may be actuated and remain actuated if the operator continues to engage reverse pedal 127. Reverse switch 123 may be mounted to plate 142 on hydrostatic transmission pump 132, and may be actuated by pivoting of the reverse return-to-neutral arm 136 against the reverse switch.

In other embodiments, an electronic linkage may be provided between the reverse pedal and the solenoid operated valves, instead of a reverse switch and mechanical linkage. For example, moving the reverse pedal to an engaged position may send an electrical signal to a controller, which sends an electrical signal to energize the solenoid operated valves.

In one embodiment, electrical connection 144 may extend between reverse switch 123 and the solenoid operated valves located in manifold 146, and electrical connection 147 also may be provided between the solenoid operated valves and battery 148. The left and right front wheel outlet conduits 116, 117 may be connected to manifold 146. Additionally, the left and right rear wheel inlet conduits 150, 151, and outlet conduits 152, 153 may be connected to manifold 146. Conduit 154 may return hydraulic fluid from the manifold to pump 110.

In one embodiment, solenoid operated valves 120, 121 include poppet valves. In the first position, during forward machine operation, each poppet valve may be biased against a seat. In the second position, during reverse machine operation, the solenoid coils are energized and each poppet valve moves off of its seat to provide a passage for hydraulic fluid to flow around each rear wheel motor.

The reverse over-ride system may prevent the rear wheels from being pushed by the front wheels during a reverse turn, to reduce damage to the turf. The reverse over-ride system allows pressure to build at the rear wheel hydraulic traction motors while the mowing machine is driving forward.

Having described a preferred embodiment, it will become apparent that various modifications can be made without departing from the scope of the invention as defined in the accompanying claims.

## Claims

1. A reverse over-ride system for a mower traction drive, **characterized by** a reverse pedal (127) movable between a normally disengaged position and an engaged position; a linkage between the reverse pedal (127) and a pair of solenoid operated valves (120, 121) that are actuated if the reverse pedal (127) is in the engaged position; actuation of the solenoid operated valves (120, 121) allowing free rotation of a pair of rear wheel hydraulic traction motors (118, 119).

2. The reverse over-ride system according to claim 1, **characterized by** a check valve to selectively permit recirculation through the pair of rear wheel hydraulic traction motors (118, 119) if the solenoid operated valves (120, 121) are unactuated.

3. The reverse over-ride system according to claim 1 or 2, **characterized in that** each rear wheel hydraulic traction motor (118, 119) is in a series hydraulic circuit with a front wheel hydraulic traction motor (116, 117).

4. The reverse over-ride system according to claim 1 or 2, **characterized in that** each rear wheel hydraulic traction motor (118, 119) is in a parallel hydraulic circuit with the other rear wheel hydraulic traction motor (118, 119).

5. The reverse over-ride system **characterized in that** the linkage is mechanical and includes a reverse switch (123).

6. The reverse over-ride system according to one or several of the claims 1 to 4, **characterized in that** the linkage is electronic.
